# EUROPEAN PATENT SPECIFICATION

(11) **EP 2 230 914 B1**
(45) Date of publication and mention of the grant of the patent: **15.01.2014**
(21) Application number: 08865590.7
(22) Date of filing: 16.12.2008
(51) Int. Cl.: A01N 47/02, A01N 53/00, A01P 7/04

(54) **ANT CONTROL**
AMEISENBEKÄMPFUNG
LUTTE CONTRE LES FOURMIS

(30) Priority: 20.12.2007 US 15323 P
(43) Date of publication of application: 29.09.2010
(73) Proprietor: Syngenta Participations AG, 4058 Basel (CH)
(72) Inventor: COSKY, Steven, Greensboro, NC 27409 (US); LOVELADY, Clark, Vero Beach, FL 32967 (US)
(74) Representative: Lee, Michael David
(86) International application number: PCT/EP2008/010700
(87) International publication number: WO 2009/080249

(56) References cited:
- WO-A1-03/011031
- GB-A- 2 316 870
- US-A1- 2006 073 180
- SEAGRAVES MICHAEL P ET AL: "Residual susceptibility of the red imported fire ant (Hymenoptera: Formicidae) to four agricultural insecticides." JOURNAL OF ECONOMIC ENTOMOLOGY, vol. 96, no. 3, June 2003 (2003-06), pages 645-648, XP002596666 ISSN: 0022-0493
- COLLINS H L ET AL: "FIPRONIL: AN ULTRA-LOW-DOSE BAIT TOXICANT FOR CONTROL OF RED IMPORTED FIRE ANTS (HYMENOPTERA: FORMICIDAE)" FLORIDA ENTOMOLOGIST, THE SOCIETY, WINTER HAVEN, FL, US, vol. 81, no. 3, 1 January 1998 (1998-01-01), pages 407-415, XP000917200 ISSN: 0015-4040
- DATABASE WPI Week 200762, Derwent Publications Ltd., London, GB; AN 2007-651525, XP002677985 -& CN 1 947 514 A (NUOPUXIN AGRIC CHEM CO LTD) 18 April 2007

## Description

The present invention relates to a method of ant control using mixtures of fipronil and lambda-cyhalothrin. The invention also relates to a method of reducing the foraging activity of ants using said mixtures.

US6559175 relates to a method of protecting a corn plant from destructive insects, by treating the corn seed or soil with a mixture of fipronil and lambda-cyhalothrin.

Ants, such as red imported fire ants, (*Solenopsis invicta* Buren) are serious pests. When a fire ant mound is disturbed, hundreds of worker fire ants will emerge from the mound to defend the colony, by attacking and stinging the intruder. Also fire ant mound-building activity can damage plant roots and lead to loss of ornamental and crop plants. In some regions, fire ants are active all year-round, and therefore it is desirable to provide long-term control. Fire ant colonies are quickly established, and are often several feet underground where the ants can find moisture and are protected from extreme hot or cold conditions.

Previously, ants have been controlled using a single insecticide. However, a single insecticide solution only provides temporary control, because it only kills worker ants foraging on or near the surface of the ground, and does not control ants present deep inside the colony. For effective long-term control, it is important to kill ants in the colony. In particular, if the queen ants are not killed, the colony can be quickly reestablished.

Over'N Out® and TopChoice® are examples of existing single-insecticide products for ant control, that contain fipronil as the active ingredient. Since fipronil is a slow-acting insecticide, worker ants transfer the insecticide into the colony before being killed. However, due to the slow-acting nature of fipronil, the products are not suitable for rapid control of foraging ants on the surface, and ant control is not immediately visible to a consumer applying the product.

More recently, a two step method has been employed to overcome these disadvantages of a single insecticide product, where a fire ant bait containing food and insecticide is applied to the external environment, and a second insecticidal composition is applied to the colony or ant mound. The disadvantage of this method is that the operator needs to make two separate applications, using different products.

GB2316870 overcomes the problem of making two separate insecticide applications, by co-formulating the insecticides. GB2316870 discloses an insecticidal bait composition comprising a bait matrix, a non-microencapsulated insecticide, and a microencapsulated insecticide.

US2006/073180 describes a method of controlling fire ants by applying a granular composition comprising a fire ant bait (containing an insecticide such as fipronil) and a controlled-release insecticide (such as lambda-cyhalothrin). The formulation is designed to prevent quick knock-down, so that even after contact with fipronil, foraging ants are not killed immediately and carry the lambda-cyhalothrin back to the colony where it is subsequently released to provide long term control.

Both GB2316870 and US2006/073180 teach that it is necessary to employ a controlled-release formulation when co-formulating insecticides, in order to prevent antagonism between these insecticidal compounds.

Pyrethroids are generally known to be repellent, as well as to provide quick knock-down and control of ants. Due to the fast-acting nature of lambda-cyhalothrin, the person skilled in the art would expect that if co-formulated with another insecticide (such as fipronil), lambda-cyhalothrin would prevent foraging ants from successfully bringing the other insecticide back to the colony. Also, the person skilled in the art would expect that the repellent properties of lambda-cyhalothrin would deter ants from coming into contact with fipronil treated granules.

Surprisingly, it has now been found that excellent ant control can be achieved using a mixture of fipronil and lambda-cyhalothrin, wherein said composition is designed to give rapid release of the active ingredients. Surprisingly, the level of ant control was higher using these active ingredients in combination than alone. More surprisingly, it has been found that mixtures of fipronil and lambda-cyhalothrin have a synergistic effect in reducing the foraging activity of ants.

According to the present invention, there is provided a method of controlling ants comprising applying to a locus at which ants are present, a composition comprising fipronil and lambda-cyhalothrin, wherein said composition is designed to give rapid release of the active ingredients.

In contrast to US2006/073180, the formulation of the present invention achieves rapid knockdown by direct contact of foraging ants with the pyrethroid insecticide, lambda-cyhalothrin, and long term control by the presence of fipronil. It is important to use an appropriate dose of pyrethroid in order to provide good knock-down whilst ensuring that sufficient fipronil is transferred to the ant colony to achieve good long term control. The appropriate dose of lambda-cyhalothrin will vary depending on the target ant species and its susceptibility to the insecticide. Suitably, the dose will be sub-lethal for at least some of the ant population.

The term locus refers to any location where ants may be found, such as a yard, garden, park, lawn, golf course and so on.

The term controlled-release formulation refers to any formulation in which the insecticide is released gradually over time, or in response to some environmental condition. For example, a gradual release of insecticide in a controlled-release formulation may be achieved by adsorbing the insecticide onto an inert carrier, from which it is slowly released. Alternatively, the controlled-release formulation could be in the form of a capsule that ruptures upon contact with water or is degraded by UV light, releasing liquid insecticide.

The composition may be present as any suitable formulation type, for example a liquid, granule, foam, gel, dust and so on. In one embodiment of the present invention, the composition is in the form of a liquid. In a further embodiment of the present invention, the composition is in the form of granules. Granule formulations are particularly advantageous because they can be easily and quickly applied without exposure to the operator, and can be readily carried back to the colony by the ants.

The composition for use in the method of the present invention may be formulated in various ways. For example, where the composition is in the form of granules, the fipronil and lambda-cyhalothrin may be present in separate granules or prills, that are homogeneously mixed at an appropriate ratio. Alternatively, the fipronil and lambda-cyhalothrin may be co-formulated so that both insecticides are present in the same granules or prills.

In order to achieve good ant control, it is important to adjust the relative amounts of fipronil and lambda-cyhalothrin. If too much pyrethroid is present, all foraging ants will be killed rapidly, and so the insecticidal composition will not be taken back to the colony. Conversely, if too little pyrethroid is present, the composition will not result in fire ant control quickly enough to meet consumer expectations. When the pyrethroid is lambda-cyhalothrin, suitably the weight ratio of lambda-cyhalothrin to fipronil is from about 3:1 to about 7:1. More suitably, the weight ratio of lambda-cyhalothrin to fipronil is about 5:1.

Compositions of the present invention may contain from about 0.001% to about 99% insecticide. Suitably, the composition contains from about 0.001% to about 10% insecticide. More suitably, the composition contains from about 0.001 % to about 1% insecticide. More suitably, the composition contains from about 0.004% to about 0.5% insecticide. The application rate is calculated based on the amount of insecticide present in the composition, taking account of any dilution that may be required, to ensure that the correct dosing is achieved. For example, in one embodiment the composition contains 0.0135% lambda-cyhalothrin and 0.0206% fipronil, and is applied without dilution at a rate of 11b per 1000 square feet.

The composition used in the method of the present invention releases the active ingredients rapidly. For example, when the formulation is a granule, the granules are suitably designed to rapidly disintegrate and disperse in the presence of free moisture.

Granules may be distributed by various means, for example by hand. For more effective and even distribution of the desired amount of insecticide a rotary spreader, shaker can or drop spreader may be used.

Granular formulations for use in the present invention include both extrudates and relatively coarse particles. In addition to the insecticides, generally, the granules can include fillers (also referred to as a carrier), surface active agents (which term can include dispersants and wetting agents) and auxiliary agents such as binders, stabilizers and buffering agents. The filler can be inert, or can serve a biological function, such as acting as a fertilizer. The filler, as well as the other components, preferably should not degrade the insecticidally active material during the granule preparation or on long term storage or use in the field. Those of skill in the art can readily select appropriate granule components to satisfy these criteria.

Typical carriers for granular formulations include fertiliser, sand, limestone, fuller's earth, attapulgite clay, bentonite clays, montmorillonite clay, vermiculite, perlite, calcium carbonate, brick, pumice, pyrophyllite, kaolin, dolomite, plaster, wood flour, ground corn cobs, ground peanut hulls, sugars, sodium chloride, sodium sulphate, sodium silicate, sodium borate, magnesia, mica, iron oxide, zinc oxide, titanium oxide, antimony oxide, cryolite, gypsum, chalk, zeolite, calcite, diatomaceous earth, calcium sulphate and other organic or inorganic materials which absorb, or which can be coated with, a pesticide.

The granular substrate material can be one of the typical carriers mentioned above and/or can be a fertiliser material such as urea/formaldehyde fertilisers, urea, potassium compounds (such as potassium sulphate, nitrate, chloride, oxide, metaphosphate), ammonium compounds (such as ammonium nitrate, sulphate, phosphate), phosphorus compounds (such as phosphoric acid), sulphur, similar plant nutrients and micronutrients and mixtures or combinations thereof. The insecticides may be homogeneously distributed throughout the granule, spray impregnated or absorbed onto the granule substrate after the granules are formed, or coated onto the surface of the granule.

A binder may be used to agglomerate the components of the granules. When present, the binder can be typically used in amounts up to about 20 percent by weight (dry basis) of the granular composition, more typically between about 2 to about 20 percent by weight. The binder binds the ingredients into a granular substrate and maintains particle size during handling. Examples of suitable binders include brewers condensed solubles, lignosulfonate, sodium carbonate lignin, cane molasses, beet syrup, beet molasses, desugared beet molasses, whey, starch, soy solubles with cane molasses or the like, hydrolyzed collagen, amino acid solutions, cellulose derivatives, or cellulose based polymer binders. Other water soluble binders having equivalent properties to, for example, brewer's condensed solubles, can also be used.

Additional auxiliary agents such as surfactants, dispersants, disintegrating agents, wetting agents and the like, can be added where desired to modify the properties of the granules.

Additional active ingredients may also be present in the formulations, including surface-active agents such as heavy aromatic naphthas, kerosene and other petroleum fractions, or vegetable oils; and/or stickers such as dextrins, glue or synthetic resins.

Additionally, the formulation may also include an attractant to promote contact of the ants with insecticide, and encourage foraging ants to carry the formulation back to the colony. Typically, the composition will be in the form of a bait.

According to the present invention, there is provided a method of reducing the foraging activity of fire ants, comprising applying to a locus at which ants are present, a composition comprising fipronil and lambda-cyhalothrin, wherein said composition is designed to give rapid release of the active ingredients.

The present invention may be used to control any undesirable ant species in any particular location. The following, non-limiting, list of ant species may be controlled by the present invention: Fire ants (*Solenopsis* spp., e.g. Red imported fire ant, *Solenopsis invicta*), White-footed ant (*Technomyrmex albipes*), Odorous house ant (*Tapinoma sessile*), Pyramid ant (*Dorymyrmex pyramicus*), Harvester ant (e.g. *Pogonomyrmex barbatus*), Ground-nesting ants, Carpenter ant (*Camponotus* spp.), Argentine ant (*Linepithema humile*), Pharaoh ant (*Monomorium pharaonis*), Crazy ant (*Paratrechina longicornis*), Yellow crazy ant (*Anoplolepis gracilipes*), Caribbean crazy ant (*Paratrechina pubens*), Big headed ant (*Pheidole* spp.) *Lasius* spp., Little fire ant (*Wasmannia auropunctata*), and Thief ant (*Solenpsis molesta*). In one embodiment the present invention is used for the control of fire ants.

The following examples are for illustrative purposes only. The examples are not intended as necessarily representative of the overall testing performed and are not intended to limit the invention in any way. As one skilled in the art is aware, a significant number of factors that are not readily controllable can affect the results of individual tests and render them non-reproducible. For example, the results may vary depending on environmental factors, such as temperature and rainfall.

### EXAMPLES

### Example 1

### 1.1 Trial design

Trials were setup on an area of mowed Bahiagrass pasture having heavy fire ant (*Solenopsis invicta* Buren) activity. Active ant mounds were identified on the pasture, and twenty 25ft² plots were marked out, each encompassing two active mounds.

A Gandy Drop Spreader was used to apply the appropriate treatment to each plot as indicated in Table 1 below, with four plots (replicates) used per treatment.

**TABLE 1: Treatments and rates**

| **Treatment** | **Product** | **Active ingredient** | **Rate** |
|---|---|---|---|
| 1 | Untreated | None | None |
| 2 | Demand G® | Lambda-cyhalothrin | 3lbs/1000ft² |
| 3 | Over'N Out® | Fipronil | 2 lbs/1000ft² |
| 4 | Demand G® + Over'N Out® | Lambda-cyhalothrin + fipronil | 1.5lbs and 2lbs / 1000ft² respectively |
| 5 | Demand G® + Over'N Out® | Lambda-cyhalothrin + fipronil | 3lbs and 2lbs / 1000ft² respectively |

The two products for treatments 4 and 5 were thoroughly mixed before application. All treatments were watered in using ¼ inch water per plot.

### 1.2 Mound disturbance assessments

Assessments of mound disturbance were made prior to treatment (day 0), and also 1, 2, 3, 5 7, 10 14, 17 and 21 days after treatment.

The mound is disturbed with a survey flag and the ant response rated in a scale from 0 to 10, with 0 being no emerging ants, 1 being a very minimal response, and 10 being a very heavy response.

### 1.3 Foraging index assessments

Assessments of foraging index were made prior to treatment (day 0), and also 1, 2, 3, 5 7, 10, 14, 17, and 21 days after treatment.

Two slices of hot dog were placed in each plot on index cards just before sunrise, and left out for 90 minutes. The number of ants on the cards was rated on a scale from 0 to 10, with 0 being no ants, 1 being minimal ants, and 10 being complete coverage of the hot dog with overlap onto the card.

### 1.4 Results

Table 2 gives the mean percent values of the foraging index as a function of the Day 0 values. The lower the percentage value, the less foraging activity observed.

**TABLE 2: Mean percentage foraging index values**

| | Day 1 | Day 2 | Day 3 | Day 5 | Day 7 | Day 10 | Day 14 | Day 17 | Day 21 |
|---|---|---|---|---|---|---|---|---|---|
| Treatment 1 | 99 % | 99 % | 89 % | 94 % | 96 % | 81 % | 54 % | 50 % | 45 % |
| Treatment 2 | 29 % | 37 % | 45 % | 40 % | 54 % | 67 % | 64 % | 74 % | 67 % |
| Treatment 3 | 88 % | 59 % | 49 % | 55 % | 44 % | 34 % | 14 % | 19 % | 14 % |
| Treatment 4 | 19 % | 15 % | 48 % | 6 % | 18 % | 58 % | 11 % | 17 % | 17 % |
| Treatment 5 | 54 % | 45 % | 38 % | 21 % | 43 % | 40 % | 10 % | 24 % | 30 % |

Table 3 gives the mean percent values of mound disturbance as a function of the Day 0 values. The lower the percentage value, the less mound response observed.

**TABLE 3: Mean percentage mound disturbance values**

| | Day 1 | Day 2 | Day 3 | Day 5 | Day 7 | Day 10 | Day 14 | Day 17 | Day 21 |
|---|---|---|---|---|---|---|---|---|---|
| Treatment 1 | 85 % | 84 % | 65 % | 70 % | 53 % | 37 % | 68 % | 63 % | 55 % |
| Treatment 2 | 88 % | 65 % | 44 % | 40 % | 23 % | 26 % | 13 % | 23 % | 29 % |
| Treatment 3 | 91 % | 66 % | 70 % | 43 % | 29 % | 54 % | 56 % | 14 % | 9 % |
| Treatment 4 | 63 % | 45 % | 34 % | 26 % | 17 % | 18 % | 14 % | 39 % | 11 % |
| Treatment 5 | 72 % | 58 % | 39 % | 36 % | 14 % | 25 % | 33 % | 25 % | 33 % |

The data shows that, at least up to 14 days after treatment, combinations of lambda cyhalothrin and fipronil (treatments 4 and 5) result in less foraging, and less mound response, than either insecticide alone.

Note that the foraging values for the untreated control (treatment 1) were low on days 14, 17 and 21 after treatment, indicating limited foraging activity, probably due to early morning rainfall.

Also note that this trial was conducted in late summer, when the ants move deeper into the soil due to the heat. The effect of this can be seen in the variability of the mound disturbance data for the untreated control (treatment 1) over time.

### 1.5 Synergy analysis

Tables 4 and 5 show the percentage reduction (compared to the day 0 assessment) in foraging index and mound disturbance respectively, as evaluated using the Colby formula. The data is based on data from treatments 2 (lambda-cyhalothrin only), 3 (fipronil only) and 5 (lambda-cyhalothrin + fipronil). The expected result for (A+B) is (A+B) - (AxB/100) where A and B are the 'observed' results for A and B on their own. Control from mixtures of lambda-cyhalothrin and fipronil is synergistic if the actual result is significantly higher than the expected result (significance based on Student-Newman-Keuls multiple range test).

**TABLE 4: Colby analysis for percentage reduction in foraging index**

| | Day 1 | Day 2 | Day 3 | Day 5 | Day 7 | Day 10 | Day 14 | Day 17 | Day 21 |
|---|---|---|---|---|---|---|---|---|---|
| Colby value (expected) | 75.00 | 78.04 | 77.93 | 78.17 | 76.34 | 77.65 | 91.16 | 85.72 | 90.63 |
| Actual value | 80.56 | 85.00 | 51.74 | **93.75** | **82.22** | 42.26 | 89.06 | 83.21 | 83.13 |

Using the Colby formula and Student-Newman-Keuls multiple range test, synergy was seen in the foraging index at days 5 and 7 after treatment.

**TABLE 5: Colby analysis for percentage reduction in mound disturbance**

| | Day 1 | Day 2 | Day 3 | Day 5 | Day 7 | Day 10 | Day 14 | Day 17 | Day 21 |
|---|---|---|---|---|---|---|---|---|---|
| Colby value (expected) | 20.00 | 57.11 | 69.23 | 82.85 | 93.40 | 85.86 | 96.79 | 96.73 | 97.50 |
| Actual value | **36.81** | 54.86 | 65.97 | 73.61 | 83.66 | 81.94 | 86.11 | 61.11 | 88.89 |

Using the Colby formula and Student-Newman-Keuls multiple range test, synergy was seen in the mound disturbance data 1 day after treatment.

## Claims

1. A method of controlling ants comprising applying to a locus at which ants are present, a composition comprising fipronil and lambda-cyhalothrin, wherein said composition is designed to give rapid release of the active ingredients.

2. A method according to claim 1, wherein the composition is in the form of a liquid.

3. A method according to claim 1, wherein the composition is in the form of granules.

4. A method according to claim 3, wherein the fipronil and lambda-cyhalothrin are present in separate granules or prills.

5. A method according to claim 3, wherein the fipronil and lambda-cyhalothrin are present in the same granules or prills.

6. A method according to claim 1, wherein the weight ratio of fipronil to lambda-cyhalothrin is 3:1 to 7:1.

7. A method of reducing the foraging activity of ants, comprising applying to a locus at which ants are present, a composition comprising fipronil and lambda-cyhalothrin , wherein said composition is designed to give rapid release of the active ingredients.

8. A method according to any one of the preceding claims, wherein the ants are fire ants.

## Patentansprüche

1. Verfahren zum Bekämpfen von Ameisen, bei dem eine Zusammensetzung umfassend Fipronil und lambda-Cyhalothrin auf einen Ort, an dem Ameisen vorkommen, ausgebracht wird, wobei die Zusammensetzung so konzipiert ist, dass sie die Wirkstoffe rasch freisetzt.

2. Verfahren nach Anspruch 1, wobei die Zusammensetzung in Form einer Flüssigkeit vorliegt.

3. Verfahren nach Anspruch 1, wobei die Zusammensetzung in Form eines Granulats vorliegt.

4. Verfahren nach Anspruch 3, wobei das Fipronil und das lambda-Cyhalotrin in separaten Granulatkörnern oder Prills vorliegen.

5. Verfahren nach Anspruch 3, wobei das Fipronil und das lambda-Cyhalotrin in denselben Granulatkörnern oder Prills vorliegen.

6. Verfahren nach Anspruch 1, wobei das Gewichtsverhältnis von Fipronil zu lambda-Cyhalothrin 3:1 bis 7:1 beträgt.

7. Verfahren zum Verringern der Futtersucheaktivität von Ameisen, bei dem eine Zusammensetzung umfassend Fipronil und lambda-Cyhalothrin auf einen Ort, an dem Ameisen vorkommen, ausgebracht wird, wobei die Zusammensetzung so konzipiert ist, dass sie die Wirkstoffe rasch freisetzt.

8. Verfahren nach einem der vorhergehenden Ansprüche, wobei es sich bei den Ameisen um Solenopsis-Ameisen handelt.

## Revendications

1. Méthode de contrôle de fourmis, comprenant l'application à un lieu où sont présentes les fourmis, d'une composition comprenant du fipronil et de la lambda-cyhalothrine, dans laquelle ladite composition est conçue pour apporter une libération rapide des ingrédients actifs.

2. Méthode selon la revendication 1, dans laquelle la composition est sous la forme d'un liquide.

3. Méthode selon la revendication 1, dans laquelle la composition est sous la forme de granulés.

4. Méthode selon la revendication 3, dans laquelle le fipronil et la lambda-cyhalothrine sont présents dans des granulés ou des pépites séparés.

5. Méthode selon la revendication 3, dans laquelle le fipronil et la lambda-cyhalothrine sont présents dans les mêmes granulés ou pépites.

6. Méthode selon la revendication 1, dans laquelle le rapport pondéral du fipronil à la lambda-cyhalothrine va de 3:1 à 7:1.

7. Méthode de réduction de l'activité d'affouragement de fourmis, comprenant l'application à un lieu où sont présentes les fourmis, d'une composition comprenant du fipronil et de la lambda-cyhalothrine, dans laquelle ladite composition est conçue pour apporter une libération rapide des ingrédients actifs.

8. Méthode selon l'une quelconque des revendications précédentes, dans laquelle les fourmis sont des fourmis rouges.
